# EUROPEAN PATENT APPLICATION

(11) **EP 4 060 197 A1**
(43) Date of publication of application: **21.09.2022**
(21) Application number: 21163632.9
(22) Date of filing: 19.03.2021
(51) Int. Cl.: F16B 5/04, F16B 19/08

(54) **SELF-PIERCING RIVET AND SELF-PIERCING RIVETED JOINT**

(71) Applicant: Newfrey LLC, New Britain, CT 06053 (US)
(72) Inventor: DOSTAL, Dominik, 35394 Gießen (DE); BARTIG, Paul, 35394 Gießen (DE)
(74) Representative: SBD IPAdmin

(57) **Abstract**

Self-piercing riveted joint and self-piercing rivet comprising a recess delimited by a recess transition section (22) and a recess base (24), wherein the recess transition section (22) comprises a first portion (26) having a first transition radius (R1), a second portion (28) having a second transition radius (R2), wherein the recess base (24) is connected to the first portion (26), wherein the second portion (28) is connected to the flat shank end face (20), and wherein the first portion (26) is connected to the second portion (28) at an inflexion point, such that the recess transition section (22) does not comprise any straight surface.

## Description

The present invention relates to a self-piercing rivet for connecting at least two workpieces, and notably workpieces made of two different materials, with a head and a shank, the shank merging into the head via a transition section.

The present invention further relates to a self-piercing joint comprising an upper workpiece, a lower workpiece and a self-piercing rivet.

When a self-piercing rivet is driven into workpieces such as two body panels by the punch and die of a fastening device, the shank of the rivet passes through the workpieces and the end of the shank expands. The expanded (or deformed) shank and the head then hold the workpieces together. Self-piercing rivets are notably used to join workpieces or body panels together when welding is not an option. Self-piercing riveting as a joining method is widely used in the industry and is currently the main joining method for aluminium and lightweight material automotive structures.

One important parameter for the joining operation as well as the joining quality of the self-piercing rivet joint is the geometry of the self-piercing rivet. In the state of the art numerous different geometries of the self-piercing rivet are known, see e.g. EP 0 720 695 , EP 1 064 466 , EP 1 229 254 , EP 1 387 093 , DE 44 31 769 , DE 203 19 610 U1 , DE 200 01 103 U1 , US 2004/0068854 A1 , JP 2001159409A , JP 09317730A , W2015086203 , WO2014013232 or US9316243 et alia.

EP3080463A1 from the applicant relates to a self-piercing rivet for connecting high-strength steels, with a head which has a head diameter and with a shank which has a shank diameter, wherein, at the foot end opposite the head, the shank has an axial recess which has an axial depth, and wherein, at the foot end the shank has a flat surface section. The recess comprises a recess base and a recess transition section. The recess is frustoconical.

Such self-piercing rivet is very satisfying. However, a need still exists to improve such self-piercing rivet, notably for use with components made of mixed materials having different tensile strength.

It is therefore an object of the invention to specify an improved self-piercing rivet and an improved self-piercing riveted joint which are suitable for connecting two different materials having different deformation behaviour, such as a high strength material and an aluminium cast alloy.

The above-mentioned object is achieved by the self-piercing rivet defined in independent patent claim 1. More particularly, the self-piercing rivet for connecting at least two workpieces, has a head and a shank, the shank merging into the head via a transition section. The shank comprises a foot end that is opposite the head, a recess arranged at the foot end, and a flat shank end face. The recess is delimited by a recess transition section and a recess base. The recess transition section comprises a first portion having a first transition radius, a second portion having a second transition radius. The recess base is connected to the first portion, the second portion is connected to the flat shank end face. Besides, the first portion is connected to the second portion at an inflexion point, such that the recess transition section has no straight surface.

In other words, the recess transition section consists in the first and second portion. The first portion consists of a continuously arcuate portion with a first transition radius. The second portions both have consists of a continuously arcuate portion with a second transition radius. The formed self-piercing rivet is characterized by its special recess geometry. It was known from the state of the art to manufacture self-piercing rivets with a conical or frustoconical shape recess. However, several tests have surprisingly shown that a transition recess section having no straight portion, with two different curvatures and an inflexion point allows to perform a rivet having good joining qualities, notably for joining mixed materials such as aluminium cast alloys and high strength materials. Such geometry is particularly advantageous, since it allows the material of the workpieces to be joined to flow within the recess during the joining procedure without any or with limited cracks in the workpieces. With regard to the prior art, more material is captured within the recess. This leads to the use of flatter die. A better interlock is also created.

In one embodiment, the ratio of second transition radius to first transition radius is greater than 10, notably greater than 15. More particularly the ratio is greater than 16. In particular the second transition radius is significantly greater than the first transition radius. This allows to reduce stress during the setting and to allow the material of the workpiece to flow within the recess without cracks.

In one embodiment, the first transition radius is in the range of 0.5 to 0.7mm. In one embodiment, the second transition radius is in the range of 9 to 11 mm, and in particular of 10 mm. Such radii allows a smooth transition during the setting of the self-piercing rivet.

In one embodiment, the shank end face is designed as an annular surface section and has a radial width in cross section in the range of 0.1 to 0.8mm. The shank end face is flat. A flat shank end face is more robust and does not collapse. The radial width in cross section is for instance of 0.4 mm. Such width is particularly advantageous because it enables a very robust shank end face to pierce through an upper workpiece (notably a high steel material) and still small enough the build sufficient interlock. Such width is a very good compromise between robustness and rivet flaring.

In one embodiment, the recess has a recess volume in the range of 15 to 16 mm3. In one embodiment, the ratio of recess volume to solid rivet volume is greater than 0,13. The effect achieved by the relatively small volume of the recess is that the self-piercing rivet obtains a significantly greater stability.

In one embodiment, the shank comprises a cylindrical shank outer surface, and wherein a third portion with a third transition radius is provided between the shank outer surface and the flat shank end face, and wherein the third transition radius is in the range of 0.1 to 0.15 mm. The penetration of the rivet into the workpiece is better controlled.

In one embodiment, the shank has an outside diameter in the range of 5.0 to 5.5 mm. In one embodiment, the base recess is flat. In one embodiment, the recess has an axial depth which is of about 1.5 mm.

The present invention is also directed to a self-piercing joint comprising an upper workpiece, a lower workpiece and a self-piercing rivet as described above, the head of which bears against the upper workpiece, and wherein the upper workpiece is made of high-strength or super-high-strength material, notably made of high-strength or super-high-strength steel. High-strength materials are material having a tensile strength in the range of 600 N/mm2 to 1000 N/mm2. Ultra-high-strength materials have a tensile strength in the range of 1000 to 2000 N/mm2. The geometry of the recess allows low setting forces of 60 kNewtons to 80 kNewtons for example. The joint is without cracks with a satisfactory interlock and remaining material thickness.

In an embodiment, the upper workpiece has a thickness in the range of 0.4 to 1.8 mm. In an embodiment, the thickness of the upper workpiece is between 0.6 and 1.5 mm, wherein the axial length of the rivet is between 4.0 and 5.0mm.

In an embodiment, the self-piercing rivet is set with a setting force between 60 and 80 kN, and notably of 63 kN.

In an embodiment, the lower workpiece is made of aluminium alloy, notably an aluminium cast alloy. In an embodiment, the lower workpiece has a thickness in the range of 2 to 7 mm, in particular in the range of 2 to 4 mm.

In an embodiment, the shank of the deformed self-piercing rivet forms an interlock with the workpieces, and wherein the interlock distance is greater than 0.18 mm, and notably greater than 0.2 mm.

Specific embodiments of the present invention will now be described, by way of example only, with reference to the accompanying drawings in which:
Fig. 1 shows a longitudinal sectional view of a self- piercing rivet according to the invention;
Fig. 2 shows a longitudinal sectional view through a self-piercing riveted joint produced by means of a self-piercing rivet according to the invention.

On the different figures, the same reference signs designate identical or similar elements.

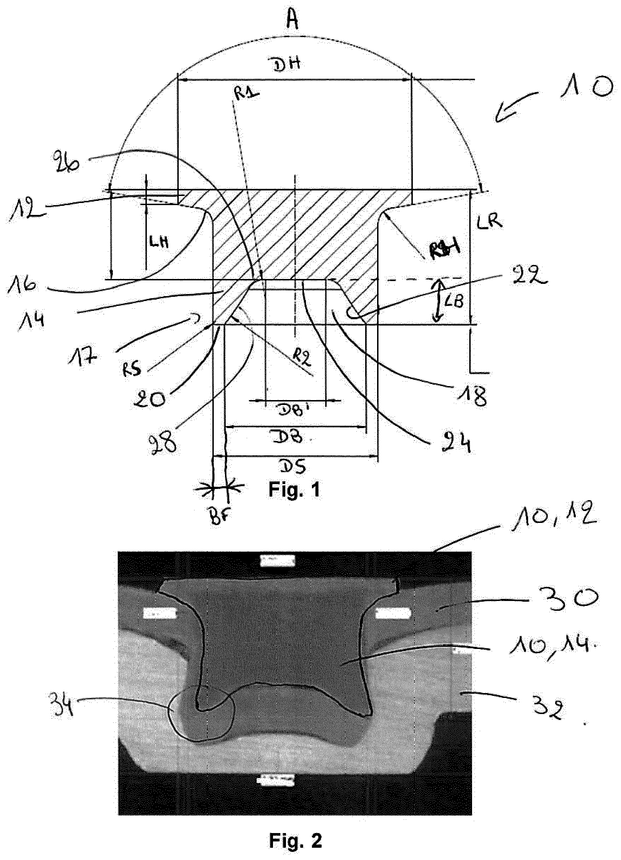

Fig. 1 shows a self-piercing rivet 10. The self-piercing rivet 10 is for instance a rotationally symmetrical semi-tubular self-piercing rivet. The self-piercing rivet comprises a head 12 and a shank 14 adjoining the latter in the axial direction. The shank extends along a longitudinal axis X and has an axial length LR. The shank 14 merges into the head via a transition section 16. The transition section 16 is for instance conical and a radius RH which forms the transition between the transition section 16 and the shank 14. However, in other embodiments, the transition section may not be conical.

The self-piercing rivet 10 is made of steel, for example a 37MnB4 steel material. It may be coated, for example with an ALMAC .021 coating. The self-piercing rivet 10 may have a H4 hardness.

The shank 14 comprises a foot end 17 that is opposite the head 12. The foot end is provided with a shank end face 20. The shank end face is a flat shank end face 20. The shank end face 20 forms a flat annular surface section, the outside diameter of which is limited by an outside diameter of the shank DS and the inside diameter of which is limited by an edge of a recess 18 which extends from the foot end 18 in the direction of the head 12. The shank end face has a radial width BF. The radial width BF is for instance between 0.1 and 0.8mm. More particularly the radial width BF is of 0.4 mm. It enables a very robust shank end face to pierce through an upper workpiece (notably a high steel material) and still small enough the build sufficient interlock. Such width is a very good compromise between robustness and rivet flaring, notably for an upper workpiece having a thickness lower than 1.5 mm. The shank 14 comprises a shank outer surface and a shank inner surface limiting the recess 18. A transition radius RS is arranged between the shank outer surface and the shank end face 20. The shank outer surface is cylindrical.

The recess 18 is an axial recess. The recess 18 comprises a recess base 24 and a recess transition section 22. The recess base 24 is for instant flat. The recess base 24 extends in a plane sensibly parallel to the shank end face 20. The recess base has a recess diameter at the base DB'. The recess diameter at the base DB' is of about 2mm.

The recess transition section 22 comprises a first portion 26 having a first transition radius R1 and a second portion 28 having a second transition radius R2. More particularly the recess transition section 22 consists of the first portion 26 and the second portion 28. The first portion is continuously curved with the first transition radius R1. The second portion is continuously curved with the second transition radius R2. The transition between the first and the second portions 26, 28 forms an inflexion point. The inflexion point is arranged at 0.6 mm of the recess base. When viewed from the recess 18 the second portion is convex, whereas the first portion is convex. The recess transition section 22 does not comprise any straight or plane portion. The ratio of second transition radius R2 to first transition radius R1 is greater than 10, notably greater than 15. More particularly, the first transition radius R1 is in the range of 0.5 to 0.7mm. The second transition radius R2 is in the range of 9 to 11 mm, and is in particular of 10 mm. The recess has a recess diameter at the foot end DB. The recess has a recess volume in the range of 15 to 16 mm³, and notably 15,784mm³. Besides, the ratio of recess volume to solid rivet volume is greater than 0,13. The solid rivet volume is the volume of the self-piercing rivet 10 without the recess.

Furthermore, the following dimensions are shown in FIG. 1, wherein the preferred values for said dimension are plotted in the table below:

| Designation | Abbreviation | value |
|---|---|---|
| Axial length of the self-piercing rivet | LR | 5 mm or |
| | | 4 mm or |
| | | 4.5 mm |
| Axial height of the head | LH | 0.5 mm |
| Axial depth of the recess | LB | 1.5 mm |
| Head diameter | DH | 7.75 mm |
| Outside diameter of the shank | DS | 5.5 mm |
| Recess diameter at the foot end | DB | 2 mm |

| | | |
|---|---|---|
| Recess diameter at the base | DB' | 4.7 mm |
| radial width shank end face BF | BF | 0.4 mm |
| Cone angle transition section | A | 160° |
| transition radius between the shank outer surface and the shank end face | RS | 0.1 mm |
| first transition radius | R1 | 0.6 mm |
| second transition radius | R2 | 10 mm |

All the values are nominal values and a tolerance is to be considered. More particularly, the geometry of the recess remains constant, independently of the axial length of the self-piercing rivet. The ratio of recess volume to solid rivet volume is for instance greater than 13%, but lower than 17%.

Fig. 2 shows a sectioned view through a self-piercing riveted joint. The self-piercing riveted joint comprises an upper workpiece 30, a lower workpiece 32 and a deformed self-piercing rivet 10 joining both workpieces. The head 12 of the self-piercing rivet bears against the upper workpiece 30. The upper workpiece is made of a high strength steel material, with a tensile strength of 1000N/mm2. The lower workpiece is for instance made of an aluminium cast alloy. As depicted in Fig. 2, the shank 14 of the deformed self-piercing rivet forms an interlock 34 with the workpieces 30, 32. The interlock is greater than 0.18, and notably of at least 0.2mm. The interlock distance is important to ensure a good amount of rivet flaring and no gap between the upper and lower workpieces around the shank 14.

Depending on the thickness of the upper workpiece, a self-piercing rivet will be chosen with a different length. For instance, for an upper workpiece having a thickness between 0.6 mm and 0.9 mm, a self-piercing rivet as described above with an axial length of 4 mm can be used. On the other end, for an upper workpiece having a thickness between 0.9 mm and 1.2 mm, an axial length of 4.5 mm can be more suitable. Finally, for an upper workpiece having a thickness between 1.2 mm and 1.5 mm, a self-piercing rivet 10 as described above with an axial length of 5 mm can be used. With the flat shank end face above-described, the self-piercing rivet is less deformed than with other smaller cutting ends during the setting step. The geometry of the recess allows low setting forces of 60 kN to 80 kN for example.
self-piercing rivet 10
head 12
shank 14
transition section 16
foot end 17
recess 18
shank end face 20
recess transition section 22
recess base 24
outside diameter of the shank DS
radial width shank end face BF
transition radius between the shank outer surface and the shank end face RS recess diameter at the base DB'
first portion 26
first transition radius R1
second portion 28
second transition radius R2
recess diameter at the foot end DB
Axial height of the head LH
workpieces 30, 32
interlock 34

## Claims

1. Self-piercing rivet (10) for connecting at least two workpieces (30, 32), with a head (12) and a shank (14), the shank (14) merging into the head (12) via a transition section (16),
wherein the shank (14) comprises a recess (18) and a flat shank end face (20), wherein the recess (18) is delimited by a recess transition section (22) and a recess base (24),
wherein the recess transition section (22) comprises a first portion (26) having a first transition radius (R1), a second portion (28) having a second transition radius (R2), wherein the recess base (24) is connected to the first portion (26),
wherein the second portion (28) is connected to the flat shank end face (20), **characterized in that** the first portion (26) is connected to the second portion (28) at an inflexion point, such that the recess transition section (22) does not comprise any straight surface.

2. Self-piercing rivet (10) according to claim 1, wherein the ratio of second transition radius to first transition radius (R2/R1) is greater than 10, notably greater than 15.

3. Self-piercing rivet (10) according to claim 1 or claim 2, wherein the first transition radius (R1) is in the range of 0.5 to 0.7mm.

4. Self-piercing rivet (10) according to any of claims 1 to 3, wherein the second transition radius (R2) is in the range of 9 to 11 mm, and in particular of 10 mm.

5. Self-piercing rivet (10) according to any of claims 1 to 3, wherein the shank end face (20) is designed as an annular surface section and has a radial width (BF) in cross section in the range of 0.1 to 0.8mm.

6. Self-piercing rivet (10) according to any of claims 1 to 3, wherein the radial width (BF) in cross section is of 0.4 mm.

7. Self-piercing rivet (10) according to any of claims 1 to 4, wherein the recess (18) has a recess volume in the range of 15 to 16 mm³.

8. Self-piercing rivet (10) according to claim 7, wherein the ratio of recess volume to solid rivet volume is greater than 0,13.

9. Self-piercing rivet (10) according to any of claims 1 to 8, wherein the shank (14) comprises a cylindrical shank outer surface, and wherein a transition radius (RS) is arranged between the shank outer surface and the shank end face 20, and wherein the transition radius is in the range of 0.1 to 0.15 mm.

10. Self-piercing rivet (10) according to any of claims 1 to 9, wherein the shank (14) has an outside diameter (DS) in the range of 5.0 to 5.5 mm.

11. Self-piercing riveted joint comprising an upper workpiece (30), a lower workpiece (32) and a self-piercing rivet (10) according to any of claims 1 to 10, the head (12) of which bears against the upper workpiece, and wherein the upper workpiece is made of high-strength or super-high-strength material, notably made of high-strength or super-high-strength steel.

12. Self-piercing riveted joint according to claim 11, wherein the lower workpiece (32) is made of aluminium alloy, notably an aluminium cast alloy.

13. Self-piercing riveted joint according to any of claims 11 to 12, wherein the shank of the deformed self-piercing rivet forms an interlock (34) with the workpieces, and wherein the interlock distance is greater than 0.18 mm.

14. Self-piercing riveted joint according to any of claims 1 to 13, wherein the thickness of the upper workpiece (30) is between 0.6 and 1.5 mm, wherein the axial length of the rivet is between 4.0 and 5.0mm.
